(19) **Europäisches Patentamt**
**European Patent Office**
**Office européen des brevets**

(11) **EP 2 539 998 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(21) Anmeldenummer: **10792863.2**

(22) Anmeldetag: **22.11.2010**

(51) Int Cl.:
**H02P 27/16** (2006.01)  **H02P 27/02** (2006.01)

(86) Internationale Anmeldenummer:
**PCT/EP2010/067930**

(87) Internationale Veröffentlichungsnummer:
**WO 2011/101051 (25.08.2011 Gazette 2011/34)**

(54) **EINRICHTUNG ZUM BETRIEB VON SYNCHRONMOTOREN UND ZUGEHÖRIGES VERFAHREN**

DEVICE FOR OPERATING SYNCHRONOUS MOTORS AND ASSOCIATED METHOD

DISPOSITIF POUR FAIRE FONCTIONNER DES MOTEURS SYNCHRONES ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2010 DE 102010008814**

(43) Veröffentlichungstag der Anmeldung:
**02.01.2013 Patentblatt 2013/01**

(73) Patentinhaber: **Siemens Aktiengesellschaft 80333 München (DE)**

(72) Erfinder: **BENECKE, Marcel 39108 Magdeburg (DE)**

(56) Entgegenhaltungen:
**EP-A2- 1 798 847   DE-A1- 10 045 291**
**DE-C1- 19 641 832   JP-A- 55 111 688**
**JP-A- 58 051 784   JP-A- 60 009 393**
**US-A- 4 125 796**

**Beschreibung**

Die Erfindung betrifft eine Einrichtung zum Betrieb von Synchronmotoren und ein zugehöriges Verfahren zum Betrieb von Synchronmotoren mit dreiphasigen Drehstromstellern, die an ein Drehstromnetz angeschlossen sind und die wenigstens zwei Halbleitersteller, beispielsweise antiparallel geschaltete Thyristoren, umfassen, die zu bestimmten Zeitpunkten geschaltet bzw. gezündet werden.

Drehstromsynchronmotoren ohne Anlaufkäfig sind prinzipbedingt an die Frequenz des speisenden Drehstromnetzes gebunden. Ein Anlauf, also Hochfahren solcher Motoren ist daher nicht direkt am Netz möglich. Vielmehr ist zwischen dem Drehstromnetz und der Synchronmaschine eine Einrichtung nötig, die das Hochfahren erst ermöglicht. Hierzu wird üblicherweise ein Frequenzumrichter verwendet. Der Frequenzumrichter besteht aus einem Gleichrichter, einem Zwischenkreis(-kondensator) und einem Wechselrichter. Er wird verwendet, um einen Drehstrom mit einstellbarer Frequenz zu erzeugen.

Einrichtungen zum Betrieb von elektrischen Maschinen, insbesondere Synchronmaschinen, sind beispielsweise aus der JP 55 111 688, der US 4,125,796 und der EP 1 987 847 A2 bekannt.

Es ist Aufgabe der Erfindung, ein Verfahren und eine Einrichtung anzugeben, mit dem bzw. mit der bei sehr geringem Aufwand an leistungselektronischen Bauelementen ein Betrieb einer Synchronmaschine an einem Drehstromnetz ermöglicht wird. Dabei soll insbesondere auch das Anlaufen der Synchronmaschine ermöglicht werden.

Die Aufgabe wird durch eine Einrichtung gemäß Anspruch 1 gelöst. Eine weitere Lösung besteht in einem Verfahren gemäß dem Anspruch 10. Weiterbildungen der Erfindung sind in den abhängigen Ansprüchen angegeben.

Bei dem erfindungsgemäßen Verfahren zum Betrieb eines Synchronmotors wird ein Drehstromsteller verwendet. Der Drehstromsteller umfasst zumindest zwei Halbleitersteller, zweckmäßig drei Halbleitersteller, einen pro Phase. Bei den Halbleiterschaltelementen kann es sich beispielsweise um Wechselstromsteller handeln. Die Wechselstromsteller können beispielsweise als Paare antiparallel geschalteter Thyristoren oder als Triacs realisiert sein. Es könnten aber auch IGBTs oder andere Typen von Halbleiterschaltern verwendet werden. Der Drehstromsteller ist an ein Drehstromnetz angeschlossen. Die Ständerwicklung des Synchronmotors ist dabei bevorzugt in Sternschaltung ohne Neutralleiter verschaltet. Die Wechselstromsteller werden zu bestimmten Zeitpunkten aktiviert bzw. gezündet, d.h. leitend geschaltet oder zur Leitung vorbereitet.

Bei dem erfindungsgemäßen Verfahren wird ein Lagewinkel des Rotors ermittelt. Der mechanische Lagewinkel gibt zweckmäßig die Lage des Rotors in Bezug auf eine festlegbare raumfeste Position an. Der Lagewinkel erstreckt sich dabei zweckmäßigerweise von 0° bis 360°. Alternativ kann auch der elektrische Lagewinkel ermittelt werden, beispielsweise über eine Auswertung elektrischer Größen am Motor. Weiterhin wird die Netzspannungsphasenlage in wenigstens einer der Phasen der Ständerwicklung ermittelt. Aus dem Lagewinkel und der Netzspannungsphasenlage werden die Zündzeitpunkte festgelegt, zu denen die Halbleitersteller eingeschaltet oder gezündet werden.

Zweckmäßig wird für die weitere Bearbeitung der elektrische Lagewinkel ermittelt oder aus dem mechanischen Lagewinkel errechnet. Umgekehrt ist es auch möglich, andere Größen so umzusetzen, dass mit dem mechanischen Lagewinkel direkt gearbeitet werden kann.

Die erfindungsgemäße Einrichtung zum Betrieb einer Synchronmaschine umfasst einen dreiphasigen Drehstromsteller, der an ein Drehstromnetz anschließbar ist und wenigstens zwei Halbleitersteller für die Phasen des Drehstromnetzes umfasst. Weiterhin ist ein Lagegeber zur Ermittlung des Lagewinkels des Rotors der Synchronmaschine vorgesehen. Ferner umfasst die Einrichtung eine Einrichtung zur Bestimmung der Netzspannungsphasenlage für wenigstens eine der Phasen des Drehstromnetzes. Schließlich sind Mittel zur Festlegung eines Paars von zwei der Halbleitersteller anhand des Lagewinkels des Rotors und Mittel zur Festlegung von Schaltzeitpunkten für die Halbleitersteller des Paars anhand der Netzspannungsphasenlage vorhanden.

Dabei ist es möglich, dass bei Durchführung des Verfahrens bzw. beim Betrieb der Einrichtung die Zündzeitpunkte zu einem bestimmten Zeitpunkt für die Zukunft festgelegt werden. Es ist aber auch möglich, dass das Verfahren kontinuierlich ausgeführt wird bzw. die Einrichtung kontinuierlich arbeitet. Mit anderen Worten werden die einzelnen Schritte in kleinen Zeitabständen wiederholt. Dann ist es auch möglich, dass die Zündzeitpunkte immer nur für den Augenblick festgelegt werden, d.h. dass nur entschieden wird, jetzt zu zünden oder eben nicht zu zünden.

Der Vorteil des erfindungsgemäßen Verfahrens liegt in der Verwendung der Rotorlage zur Festlegung von Zündzeitpunkten. Dadurch wird erreicht, dass auch bei geringen Drehzahlen des Synchronmotors nur oder nahezu nur positives Drehmoment erzeugt wird. Dabei ist mit positivem Drehmoment ein Drehmoment gemeint, das für einen Hochfahrvorgang nur in eine der beiden möglichen Richtung weist. Mit anderen Worten wird nur beschleunigendes Drehmoment erzeugt, während bremsendes Drehmoment vermieden wird.

In bekannten Verfahren werden zum Hochfahren des Synchronmotors Spannungsverläufe mit geringerer Frequenz als der Netzfrequenz synthetisiert. Dabei wird die zu erzeugende Frequenz festgelegt für einen gewissen Zeitraum. Zum Ende des Zeitraums wird auf eine höhere Frequenz umgeschaltet. Dabei wird die Frequenz festgelegt.

Gemäß der Erfindung wird hingegen zuallererst die Rotorlage berücksichtigt. Erst im zweiten Schritt wird die Netzspannungsphasenlage beachtet. Es ergibt sich deshalb beim erfindungsgemäßen Vorgehen ein Spannungsverlauf, der auch Eigenschaften eines Spannungsverlaufs mit geringerer Frequenz als der Netzfrequenz hat. Jedoch werden die erzeugten Spannungsverläufe anders aussehen als bei bekannten Verfahren. Zum einen ergeben sich Brüche im Spannungsverlauf durch das Weiterdrehen des Rotors. Zum anderen steigt die Frequenz der erzeugten effektiven Spannung direkt mit der Rotorgeschwindigkeit und wird nicht in Stufen erhöht. Vorteilhaft ist an der Erfindung, dass die Frequenz der erzeugten effektiven Spannung gar nicht gesteuert oder überhaupt beachtet werden muss; vielmehr ergibt sie sich automatisch und vorteilhaft angepasst an die aktuelle Geschwindigkeit des Rotors.

Erfindungsgemäß wird aus dem Lagewinkel eine passende Netzspannungsphasenlage für das Paar der Halbleitersteller ermittelt, die vorliegen muss, damit Zündzeitpunkte vorliegen können. Dies ergibt sich daraus, dass nur bei der richtigen Polarität der Spannungen ein positives Drehmoment erreicht wird. Zusammen mit der ermittelten Netzspannungsphasenlage werden dann vorteilhaft die tatsächlichen Zündzeitpunkte festgelegt. Bevorzugt wird dabei die Netzspannungsphasenlage in den Phasen des Paars aus zwei der wenigstens drei Halbleiterschaltelemente ermittelt.

Die Mittel zur Festlegung der passenden Netzspannungsphasenlage für das Paar von zwei der Halbleitersteller sind ausgestaltet, die Festlegung anhand von Teilbereichen für den gesamten Winkelbereich des Lagewinkels, 0 bis 360°, vorzunehmen, wobei wenigstens einem Teil der Teilbereiche jeweils eine passende Netzspannungsphasenlage für das Paar von zwei der Halbleitersteller zugeordnet ist, und die Mittel zur Festlegung einer passenden Netzspannungsphasenlage diejenige Netzspannungsphasenlage festlegen, die dem Teilbereich zugeordnet ist, in dem sich der Lagewinkel befindet.

Ebenfalls bevorzugt sind die Mittel zur Festlegung des Paars von zwei der Halbleitersteller ausgestaltet, die Festlegung anhand von Teilbereichen für den gesamten Winkelbereich des Lagewinkels, 0 bis 360°, vorzunehmen, wobei wenigstens einem Teil der Teilbereiche jeweils ein Paar von zwei der Halbleitersteller zugeordnet ist, und die Mittel zur Festlegung eines Paars dasjenige Paar festlegen, das dem Teilbereich zugeordnet ist, in dem sich der Lagewinkel befindet.

Es ist möglich, für die Festlegung des Paars und die Festlegung der passenden Netzspannungsphasenlage verschiedene Teilbereiche zu verwenden. Zweckmäßig werden jedoch für die Festlegung des Paars und die Festlegung der passenden Netzspannungsphasenlage die gleichen Teilbereiche verwendet. Sehr vorteilhaft ist es, wenn als Teilbereiche sechs gleichgroße Teilbereiche verwendet werden. Dabei umfasst jeder Teilbereich 60° des möglichen Lagewinkels. Hierdurch ist es möglich, idealerweise ein stets positives Drehmoment zu erzeugen. Dabei ist es zweckmäßig, die Lage der Teilbereiche in Bezug auf den ermittelten Lagewinkel anzupassen an die tatsächliche Gestaltung des Synchronmotors, so dass das aktuell ermittelte Paar und die aktuell ermittelte passende Netzspannungsphasenlage in ihrer elektrischen Wirkung über die Ständerwicklung auch zur Rotorlage passen. Mit anderen Worten muss die Ausrichtung der Teilbereiche oder die Definition des Lagewinkels 0° zur Ausrichtung der Ständerwicklungen passen.

Die verwendeten Teilbereiche sind dabei bevorzugt vorab festgelegt und beispielsweise in einer Tabelle gespeichert. Alternativ kann die Einrichtung ausgestaltet sein, die Festlegung des Paars und die Festlegung der passenden Netzspannungsphasenlage programmatisch festzulegen, das heißt mittels eines fest eincodierten Vergleichs des ermittelten Lagewinkels mit den vorgegebenen Teilbereichen für den Lagewinkel.

Zweckmäßig sind die Mittel zur Festlegung von Schaltzeitpunkten ausgestaltet, eine Schaltung für die Halbleitersteller des festgelegten Paars zu veranlassen, wenn die Netzspannungsphasenlage bei beiden Phasen der Halbleitersteller des festgelegten Paars der festgelegten passenden Netzspannungsphasenlage entspricht. Je nach verwendeten Halbleiterherstellern können dabei die einzelnen Halbleiterschaltelemente direkt geschaltet werden oder beispielsweise im Falle von Thyristoren gezündet.

In einer bevorzugten Ausgestaltung und Weiterbildung der Erfindung weist die Einrichtung Mittel zur Ermittlung eines Nulldurchgangs für wenigstens eine der Phasen auf. Weiterhin sind bevorzugt Mittel zur Festlegung eines Schaltwinkels vorgesehen. Ist der Nulldurchgang für wenigstens eine der Phasen bekannt, und weiterhin ein Schaltwinkel festgelegt, so kann ein Zündzeitpunkt für die entsprechende Phase um den Schaltwinkel gegenüber dem Nulldurchgang verzögert werden. Durch den Betrieb der Synchronmaschine beim Hochfahren weit unter ihrer Nenndrehzahl wird im Stator durch die Rotation des Rotors eine geringere Gegenspannung erzeugt als bei Nennbetrieb. Damit fließen bei nicht reduzierter Speisespannung deutlich erhöhte Ströme im Stator. Beim Betrieb am Drehstromsteller wird bevorzugt durch einen veränderten Phasenanschnitt ebenfalls ein geringerer Spannungseffektivwert an den Klemmen der Maschine erzielt. Dazu wird bevorzugt der Zündwinkel der Thyristoren relativ zum Nulldurchgang der Netzspannung so eingestellt, dass der fließende Strom möglichst geringfügig über dem Nennstrom der Synchronmaschine ist. Dazu kann beispielsweise bei geringen Geschwindigkeiten des Rotors ein großer Zündwinkel verwendet werden, beispielsweise nur 150°, während bei genügend hohen Geschwindigkeiten des Rotors ein kleinerer Zündwinkel von beispielsweise 90° verwendet wird (Zündverzögerung).

Das beschriebene Verfahren wird insbesondere softwaremäßig realisiert. Bezogen auf die beschriebene Einrichtung weist diese insbesondere eine Steuereinheit auf, die ausgestaltet ist, das beschriebene Vorgehen umzusetzen. Es kann daher einfach in bestehenden Drehstromstellern ohne zusätzlichen Aufwand an Bauelementen implementiert werden. Dabei ist eine Erfassung der Rotorlage nötig. Vorteilhaft ist es, wenn eine in der Synchronmaschine vorgesehene Steuereinheit, die heute zweckmäßig als Mikroprozessor realisiert ist, die Steuerung des Drehstromstellers übernimmt.

In diesem Fall liegen Daten von beispielsweise einem in der Synchronmaschine integrierten Lagegeber bereits automatisch vor. Weiterhin kann eine solche Synchronmaschine bereits den Drehstromsteller umfassen, also als Gesamteinheit realisiert sein, die somit direkt an ein Drehstromnetz anschließbar ist.

Ein bevorzugtes, jedoch keinesfalls einschränkendes Ausführungsbeispiel für die Erfindung wird nunmehr anhand der Zeichnung näher erläutert. Dabei sind die Merkmale schematisiert dargestellt und sich entsprechende Merkmale sind mit gleichen Bezugszeichen markiert. Die Figuren zeigen dabei im Einzelnen:

Figur 1    ein Ersatzschaltbild eines Drehstromstellers mit angeschlossener Synchronmaschine und
Figur 2    Diagramme zur Verdeutlichung der Zündzeitpunkte.

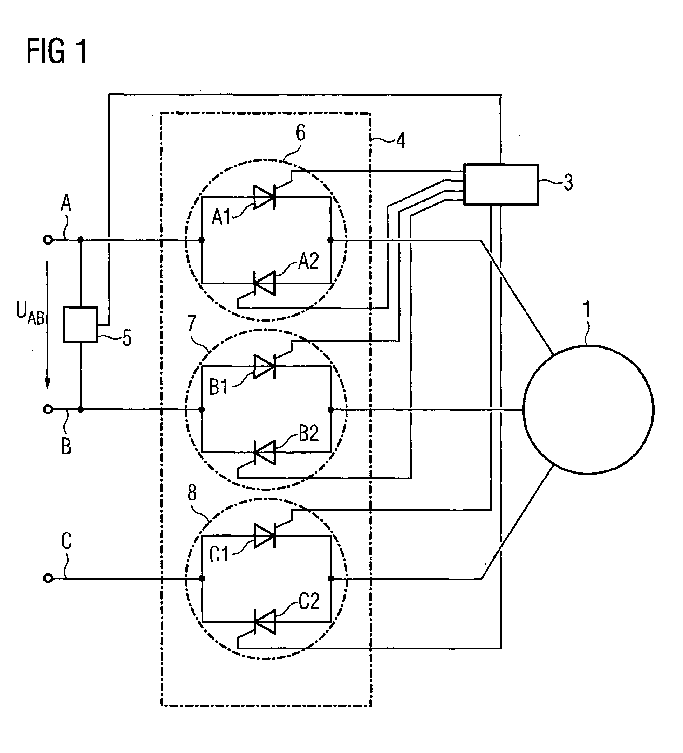

In Figur 1 ist eine Drehstrom-Synchronmaschine 1 über einen dreiphasigen Drehstromsteller 4 an die Phasen A, B, C eines Drehstromnetzes angeschlossen. Jeder der Phasen A, B, C ist ein Halbleitersteller 6, 7, 8 aus zwei antiparallel geschalteten Thyristoren A1, A2, B1, B2, C1, C2 zugeordnet. Die Zündelektroden der Thyristoren A1, A2, B1, B2, C1, C2 sind an eine Steuereinrichtung 3 angeschlossen, mit der die zum Zünden der Thyristoren A1, A2, B1, B2, C1, C2 erforderlichen Zündsignale bereitgestellt werden. Die Steuereinrichtung 3 steuert auch den Phasenanschnittwinkel. Die Steuereinrichtung 3 wird vorzugsweise durch einen Mikrocontroller realisiert. Zwischen zwei Phasen A, B, C des Netzes, beispielsweise zwischen den Klemmen A und B des Netzes in Figur 1, ist eine Spannungsmesseinrichtung 5 geschaltet, an deren Ausgang die zwischen diesen beiden Klemmen A und B auftretende Netzspannung $U_{AB}$ bereitsteht. Weitere, nicht gezeigte Spannungsmesseinrichtungen können ebenfalls für die anderen beiden Phasenpaare vorliegen.

In einem ersten Ausführungsbeispiel sind die Steuereinrichtung 3 und der Drehstromsteller 4 eine von der Drehstrom-Synchronmaschine 1 separate Einheit, also als separate Motorsteuereinrichtung realisiert. In einem zweiten Ausführungsbeispiel sind die Steuereinrichtung 3 und der Drehstromsteller 4 Teil der Drehstrom-Synchronmaschine 1. In diesem Fall sind zweckmäßig die Funktionen der Steuereinrichtung 3 in einen bereits vorhandenen Mikroprozessor in der Drehstrom-Synchronmaschine 1 integriert. In vorliegendem Fall dient die Steuereinrichtung 3 dazu, ein geeignetes Programm zu bearbeiten, mit dem softwaremäßig der Betrieb der Einrichtung erfolgen kann.

Der Erfindung liegt die Erkenntnis zugrunde, dass bei einer Vollpolsynchronmaschine 1 das von der Maschine abgegebene Drehmoment m der Raumzeigerkomponente $i_{Sq}$ des Statorstroms $i_S^R$ im rotierenden Koordinatensystem proportional ist:

$$\text{Gleichung 1:} \quad m \sim i_{Sq}, \quad \text{wobei} \quad \vec{i_S^R} = i_{Sd}^R + j \cdot i_{Sq}^R$$

Mithilfe des elektrischen Lagewinkels θ, der einem gemessenen mechanischen Lagewinkel multipliziert mit der Polpaarzahl des Motors entspricht, und der Messung der drei Statorströme kann der Ständerstromraumzeiger in Rotorkoordinaten berechnet werden:

$$\text{Gleichung 2:} \quad i_{Sq}^R = i_{1A} \cdot \left(-\sin\theta_R\right) + \left(i_{1B} - i_{1C}\right) \cdot \cos\theta_R \cdot 3^{-0,5}$$

Aus der Gleichung 2 können Zündbedingungen in Abhängigkeit von der Rotorlage formuliert werden. Unter der Voraussetzung der Verschaltung der Statorwicklung der Synchronmaschine 1 in Sternschaltung ohne Neutralleiter und der Annahme eines Stromflusses in jeweils genau zwei Phasen A, B, C lassen sich drei verschiedene Zusammenhänge der obigen Gleichung angeben:

$$\text{Gleichung 3a:} \quad i_{Sq}^R \Big|_{i_{1A} = -i_{1B}} = i_{1A} \cdot \left(-\sin\theta_R - \cos\theta_R \cdot 3^{-0,5}\right)$$

$$\text{Gleichung 3b:} \quad i_{Sq}^{R}\Big|_{i_{1A}=-i_{1C}} = i_{1A} \cdot \left(-\sin\theta_R + \cos\theta_R \cdot 3^{-0,5}\right)$$

$$\text{Gleichung 3c:} \quad i_{Sq}^{R}\Big|_{i_{1B}=-i_{1C}} = i_{1B} \cdot \left(\cos\theta_R \cdot 2 \cdot 3^{-0,5}\right)$$

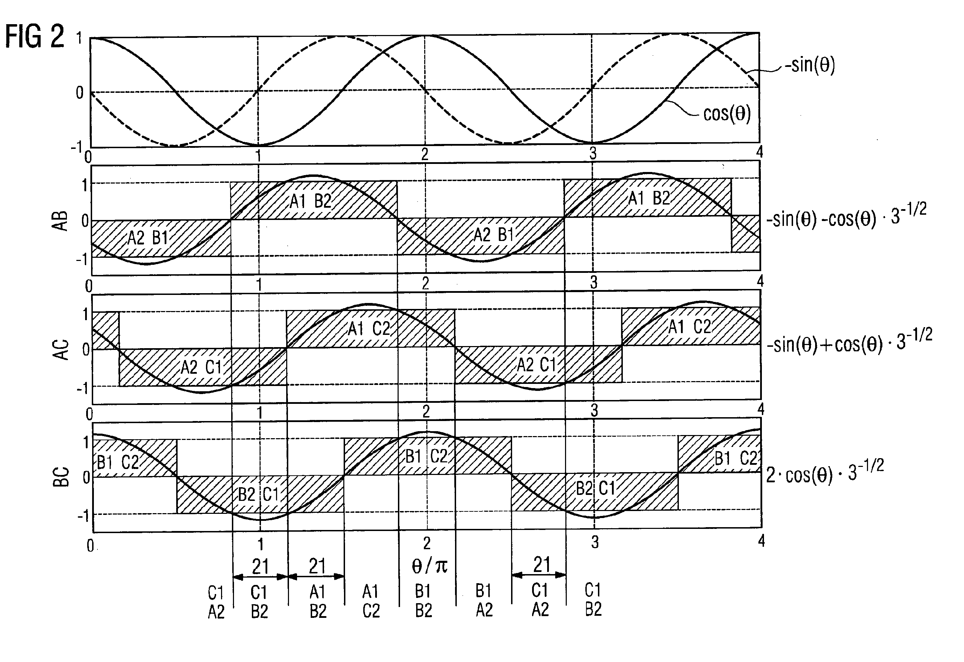

Figur 2 zeigt die verknüpften trigonometrischen Funktionen gemäß der Klammerausdrücke in Gleichung 3 für zwei Perioden des elektrischen Winkels θ, also einer Winkellage des Rotors von 0°/p bis 720°/p (p = Polpaarzahl). Dabei ist auf der Abszisse die elektrische Winkellage des Motors dargestellt, nicht etwa der Zeitverlauf. Deshalb sind alle Verläufe von 2 n bis 4 π eine exakte Kopie der Verläufe von 0 bis 2 n. Zusätzlich zeigt die Figur 2 die möglichen sich ergebenden Leitbereiche der Thyristoren A1, A2, B1, B2, C1, C2 für die Phasenpaarungen AB, AC und BC. Bestimmte Bereiche 21 schließen sich dabei gegenseitig aus, da sie die Leitung jeweils beider Thyristoren A1, A2, B1, B2, C1, C2 eines Halbleiterstellers 6, 7, 8 zugleich fordern. Schließt man diese Zustände aus, lässt sich eine Zündfolge gemäß Abbildung 2 unten angeben, bei der jeweils zwei Halbleitersteller 6, 7, 8 gezündet werden. Damit orientiert sich die Festlegung der Zündzeitpunkte soweit ausschließlich an der Rotorposition und berücksichtigt nicht die Phasenlage der Netzspannung.

So ergibt sich bei Ausschluss von sich widersprechenden Leitungsvorgaben im Bereich des Lagewinkels θ zwischen 5/6 n und 7/6 n das Phasenpaar BC. Als Paar von zu zündenden Halbleiterstellern ergeben sich die entsprechenden Halbleiterhersteller 7, 8 für die Phasen B und C. Die passende Netzspannungsphasenlage zwischen den Phasen B und C ist dabei negativ, entsprechend einem Stromfluss von Phase C nach Phase B. Im anschließenden Teilbereich des Lagewinkels θ zwischen 7/6 π und 9/6 π ist das festzulegende Paar von Halbleiterstellern 6, 7 das der Phasen A und B. Die passende Netzspannungsphasenlage zwischen den Phasen A und B ist dabei positiv, entsprechend einem Stromfluss von Phase A nach Phase B. Die weiteren Teilbereiche funktionieren analog gemäß Figur 2.

Zusätzlich zur Orientierung der Zündfolge an der Rotorlage erfolgt vorteilhaft eine Synchronisation der Zündung mit der Netzspannung. Damit wird erreicht, dass eine Leitung der Thyristoren A1, A2, B1, B2, C1, C2 nur möglich ist, wenn die Netzspannungsphasenlage der jeweiligen Netzspannung bei der jeweiligen Phase A, B, C richtig ist, wenn also auch tatsächlich das gewünschte Drehmoment erzeugt wird. Dabei kann der Übergang in den zündbereiten Zustand auch verzögert ausgeführt werden, also mit einem Zündwinkel. Beispielsweise könnte die Zündung ausgehend vom positiven Nulldurchgang der Spannung $U_{AB}$ um beispielsweise 90° auf die Netzfrequenz bezogen verzögert erfolgen.

Ist also der Rotor der Synchronmaschine 1 im Sinne eines Beispiels vor dem Hochlaufen in einer Ruhelage bei einem Lagewinkel von etwa 1/3 π, so bewirkt die Steuerung, dass Zündzeitpunkte nur für die Halbleitersteller 6, 7 der Phasen A und B ermöglicht werden. Zusätzlich prüft die Steuerung kontinuierlich, ob die Polarität der vom Drehstromnetz her anliegenden Spannungen mit der passenden Netzspannungsphasenlage, in diesem Fall negativ aus Sicht der Phase A gegen die Phase B, übereinstimmen. Nur wenn das der Fall ist, werden aus den potentiellen Zündzeitpunkten für die Halbleitersteller 6, 7 der Phasen A und B tatsächliche Zündzeitpunkte, zu denen also auch eine Stromleitung ermöglicht wird.

Dies führt im gegebenen Beispiel dazu, dass eine im Wesentlichen gepulste Gleichspannung vom Drehstromsteller 4 an die Ständerwicklungen der Synchronmaschine 1 weitergegeben wird. Die Pulsung ergibt sich dabei durch die Netzfrequenz des Drehstromnetzes. Diese bleibt so lange erhalten, bis der Rotor durch seine anlaufende Drehung die Grenze des Lagewinkels von 3/6 π überschreitet, wodurch sein Lagewinkel in den nächsten Teilbereich 21 zwischen 3/6 π und 5/6 π eintritt. In diesem Teilbereich 21 wird nun gemäß Figur 2 umgeschaltet auf die Halbleitersteller 6, 8 der Phasen A und C. Das Weiterdrehen des Rotors bewirkt in der Folge ein weiteres Umschalten zwischen den Teilbereichen 21 und somit zwischen den verwendeten Halbleiterstellern 6, 7, 8. Dadurch ergeben sich, sobald der Rotor nicht mehr ruht, von den Halbleiterstellern 6, 7, 8 weitergegebene Wechselspannungen. Da die Polarität der weitergegebenen Spannungen sich nach der Rotorlage richtet, richtet sich die Frequenz dieser Wechselspannungen nach der Drehgeschwindigkeit des Rotors.

Dass eine Auswahl von zwei Halbleiterstellern 6, 7, 8 aus drei vorhandenen Halbleiterstellern 6, 7, 8 getroffen wird, bedingt, dass bei jedem Übergang des Lagewinkels θ des Rotors von einem Teilbereich 21 zum nächsten Teilbereich 21 einer der verwendeten Halbleitersteller 6, 7, 8 gewechselt wird, während der andere verwendete Halbleitersteller 6, 7, 8 gleich bleibt. Dabei zeigt Figur 2, dass beim Übergang von einem Teilbereich 21 zum nächsten Teilbereich 21 der beim gleichbleibenden Halbleitersteller 6, 7, 8 zur tatsächlichen Stromleitung zuständige Thyristor A1, A2, B1, B2, C1, C2 der gleiche bleibt. Ein Wechsel der Netzspannungsphasenlage für einen der Halbleitersteller 6, 7, 8 ergibt sich nur nach einem Wechsel aus einem Teilbereich 21, in dem dieser Halbleitersteller 6, 7, 8 inaktiv war.

Bei einer Umsetzung bei Netzfrequenz von 50 Hz ist die Periodendauer der Spannung 20 ms. Es ergeben sich daher für einen Wechselstromsteller alle 20 ms potentielle Zündzeitpunkte. Die negativen Halbwellen der Spannung sind dadurch automatisch ausgeblendet. Vor allem dann, wenn der Rotor sich bereits mit einer erheblichen Geschwindigkeit dreht, ist damit zu rechnen, dass die Übertritte von einem der Teilbereiche des Lagewinkels in einen anderen Teilbereich mit einer ähnlichen Rate erfolgen wie die Nulldurchgänge der Netzspannung. Dann kann sich das anzusteuernde Paar von Wechselstromstellern schon ändern, während das vorher gültige Paar noch gezündet ist. Es ergeben sich also bei nicht zu langsamem Rotor daher potentielle Zündzeitpunkte alle 20 ms / 3, also alle ca.6 ms.

Dies hat weiterhin die Auswirkung, dass Strom unter Umständen noch durch einen der Halbleiterschalter eines Wechselstromstellers fließt, obwohl dieser im Idealfall gar nicht mehr aktiv sein sollte, weil der Rotor sich in den nächsten Teilbereich bewegt hat, in dem die anderen beiden Wechselstromsteller aktiv sein sollten. Bei der Verwendung von Thyristoren ist das nicht direkt zu verhindern. Unter den genannten Umständen wird dann ein unerwünschtes, negatives Drehmoment erzeugt, bis der Strom im "falschen" Wechselstromsteller abgeklungen ist.

Daher ist es hier sehr vorteilhaft, den Zündwinkel zu beeinflussen. Wird anhand der Rotorlage ein Übertritt in den nächsten Teilbereich des Lagewinkels erwartet, während der Strom noch im - dann falschen Wechselstromsteller - fließt, so kann mittels eines veränderten Zündwinkels der insgesamt fließende Strom vermindert werden. Dazu werden die Thyristoren beispielsweise später gezündet. Ein verringerter Strom sorgt auch für eine verkürzte Zeitspanne, bis der Strom wieder abklingt und die Thyristoren abschalten.

**Patentansprüche**

1. Einrichtung zum Betrieb einer Synchronmaschine (1) mit

   - einem dreiphasigen Drehstromsteller (4), der an ein Drehstromnetz anschließbar ist und wenigstens zwei Halbleitersteller (6, 7, 8) für die Phasen (A, B, C) des Drehstromnetzes umfasst,
   - einem Lagegeber zur Ermittlung des Lagewinkels (θ) des Rotors der Synchronmaschine (1),
   - einer Einrichtung zur Bestimmung der Netzspannungsphasenlage für wenigstens eine der Phasen (A, B, C) des Drehstromnetzes,
   - Mitteln zur Festlegung eines Paars von zwei der Halbleitersteller (6, 7, 8) anhand des Lagewinkels (θ) des Rotors,
   - Mitteln zur Festlegung von Schaltzeitpunkten für die Halbleitersteller (6, 7, 8) des jeweiligen Paars anhand der Netzspannungsphasenlage, **gekennzeichnet durch**
   - Mittel zur Festlegung einer passenden Netzspannungsphasenlage für das Paar von zwei der Halbleitersteller (6, 7, 8) zur Erzeugung eines positiven Drehmoments anhand des Lagewinkels (8) des Rotors, wobei die Mittel zur Festlegung einer passenden Netzspannungsphasenlage für das Paar von zwei der Halbleitersteller (6, 7, 8) ausgestaltet sind, die Festlegung anhand von Teilbereichen (21) für den gesamten Winkelbereich des Lagewinkels (θ), 0 bis 360°, vorzunehmen, wobei wenigstens einem Teil der Teilbereiche (21) jeweils eine passende Netzspannungsphasenlage für das Paar von zwei der Halbleitersteller (6, 7, 8) zugeordnet ist, und die Mittel zur Festlegung einer passenden Netzspannungsphasenlage diejenige Netzspannungsphasenlage festlegen, die dem Teilbereich (21) zugeordnet ist, in dem sich der Lagewinkel (θ) befindet.

2. Einrichtung gemäß Anspruch 1, die eine gespeicherte Tabelle umfasst, in der die Teilbereiche (21) und die zugeordneten passenden Netzspannungsphasenlagen gespeichert sind.

3. Einrichtung gemäß Anspruch 1 oder 2, bei der die Mittel zur Festlegung des Paars von zwei der Halbleitersteller (6, 7, 8) ausgestaltet sind, die Festlegung anhand von Teilbereichen (21) für den gesamten Winkelbereich des Lagewinkels (θ), 0 bis 360°, vorzunehmen, wobei wenigstens einem Teil der Teilbereiche (21) jeweils ein Paar von zwei der Halbleitersteller (6, 7, 8) zugeordnet ist, und die Mittel zur Festlegung eines Paars dasjenige Paar festlegen, das dem Teilbereich (21) zugeordnet ist, in dem sich der Lagewinkel (θ) befindet.

4. Einrichtung gemäß Anspruch 3, die eine gespeicherte Tabelle umfasst, in der die Teilbereiche (21) und die zugeordneten Paare gespeichert sind.

5. Einrichtung gemäß einem der vorangehenden Ansprüche, derart ausgestaltet, dass sechs Teilbereiche (21) verwendet werden.

6. Einrichtung gemäß einem der vorangehenden Ansprüche, derart ausgestaltet, dass jeder Teilbereich (21) einen Winkelbereich des elektrischen Lagewinkels von 60° umfasst.

7.  Einrichtung gemäß einem der vorangehenden Ansprüche, bei der die Mittel zur Festlegung von Schaltzeitpunkten ausgestaltet sind, eine Schaltung für die Halbleitersteller (6, 7, 8) des festgelegten Paars zu veranlassen, wenn die Netzspannungsphasenlage bei beiden Phasen (A, B, C) der Halbleitersteller (6, 7, 8) des festgelegten Paars der festgelegten passenden Netzspannungsphasenlage entsprechen.

8.  Einrichtung gemäß einem der vorangehenden Ansprüche mit Mitteln zur Ermittlung eines Nulldurchgangs für wenigstens eine der Phasen (A, B, C) und mit Mitteln zur Festlegung eines Schaltwinkels, um den Schaltzeitpunkte verzögert gegenüber dem Spannungs-Nulldurchgang festgelegt werden.

9.  Einrichtung gemäß einem der vorangehenden Ansprüche mit drei Halbleiterstellern (6, 7, 8) aus je zwei antiparallelen Thyristoren (A1, A2, B1, B2, Cl, C2).

10. Verfahren zum Betrieb einer Synchronmaschine (1) mit einem dreiphasigen Drehstromsteller (4), der an ein Drehstromnetz angeschlossen ist und wenigstens zwei Halbleitersteller (6, 7, 8) aufweist, die zu bestimmten Zündzeitpunkten leitend geschaltet oder gezündet werden, mit folgenden Verfahrensschritten:

    - Ermittlung eines Lagewinkels ($\theta$) des Rotors,
    - Ermittlung der Netzspannungsphasenlage in wenigstens einer der Phasen (A, B, C) des Drehstromnetzes ,
    - Festlegung der Zündzeitpunkte anhand des Lagewinkels ($\theta$) und der Netzspannungsphasenlage derart, dass ein positives Drehmoment erzeugt wird,
    indem
    - ein Paar von zwei der Halbleitersteller (6, 7, 8) anhand des Lagewinkels ($\theta$) des Rotors festgelegt wird, **dadurch gekennzeichnet, dass**
    - eine passende Netzspannungsphasenlage für das Paar von zwei der Halbleitersteller (6, 7, 8) zur Erzeugung eines positiven Drehmoments anhand des Lagewinkels ($\theta$) des Rotors festgelegt wird, wobei die Festlegung anhand von Teilbereichen (21) für den gesamten Winkelbereich des Lagewinkels ($\theta$), 0 bis 360°, vorgenommen wird, wobei wenigstens einem Teil der Teilbereiche (21) jeweils eine passende Netzspannungsphasenlage für das Paar von zwei der Halbleitersteller (6, 7, 8) zugeordnet ist, und diejenige Netzspannungsphasenlage festgelegt wird, die dem Teilbereich (21) zugeordnet ist, in dem sich der Lagewinkel ($\theta$) befindet,
    - Schaltzeitpunkte für die Halbleitersteller (6, 7, 8) des jeweiligen Paars anhand der passenden Netzspannungsphasenlage zusammen mit der Netzspannungsphasenlage festgelegt werden.

**Claims**

1.  Device for operating a synchronous machine (1), comprising

    - a three-phase AC power controller (4) which can be connected to a three-phase system and comprises at least two semiconductor controllers (6, 7, 8) for the phases (A, B, C) of the three-phase system,
    - a position encoder for determining the position angle ($\theta$) of the rotor of the synchronous machine (1),
    - a device for determining the system voltage phase position for at least one of the phases (A, B, C) of the three-phase system,
    - means of specifying a pair of two of the semiconductor controllers (6, 7, 8) on the basis of the position angle ($\theta$) of the rotor,
    - means of specifying switching instants for the semiconductor controllers (6, 7, 8) of the respective pair on the basis of the system voltage phase position, **characterised by**
    - means of specifying an appropriate system voltage phase position for the pair of two of the semiconductor controllers (6, 7, 8) for producing a positive torque on the basis of the position angle ($\theta$) of the rotor, wherein the means of specifying an appropriate system voltage phase position for the pair of two of the semiconductor controllers (6, 7, 8) are designed to perform the specification on the basis of sub-ranges (21) for the total angular range of the position angle ($\theta$), 0 to 360°, wherein at least some of the sub-ranges (21) are each assigned an appropriate system voltage phase position for the pair of two of the semiconductor controllers (6, 7, 8), and the means of specifying an appropriate system voltage phase position specify the system voltage phase position assigned to the sub-range (21) containing the position angle ($\theta$).

2.  Device according to claim 1, comprising a stored table in which the sub-ranges (21) and the assigned appropriate system voltage phase positions are stored.

3. Device according to claim 1 or 2, wherein the means of specifying the pair of two of the semiconductor controllers (6, 7, 8) are designed to perform the specification on the basis of sub-ranges (21) for the total angular range of the position angle ($\theta$), 0 to 360°, wherein at least some of the sub-ranges (21) are each assigned a pair of two of the semiconductor controllers (6, 7, 8), and the means of specifying a pair specify the pair assigned to the sub-range (21) containing the position angle ($\theta$).

4. Device according to claim 3, comprising a stored table in which the sub-ranges (21) and the assigned pairs are stored.

5. Device according to one of the preceding claims, implemented such that six sub-ranges (21) are used.

6. Device according to one of the preceding claims, implemented such that each sub-range (21) encompasses an angular range of the electrical position angle of 60°.

7. Device according to one of the preceding claims, wherein the means of specifying switching instants are designed to cause the semiconductor controllers (6, 7, 8) of the specified pair to switch if the system voltage phase position for both phases (A, B, C) of the semiconductor controllers (6, 7, 8) of the specified pair corresponds to the appropriate system voltage phase position specified.

8. Device according to one of the preceding claims, having means of determining a zero crossing for at least one of the phases (A, B, C) and having means of specifying a switching angle by which switching instants are specified with a delay with respect to the voltage zero crossing.

9. Device according to one of the preceding claims, having three semiconductor controllers (6, 7, 8) each consisting of two inverse parallel connected thyristors (A1, A2, B1, B2, C1, C2).

10. Method for operating a synchronous machine (1), having a three-phase AC power controller (4) which is connected to a three-phase system and has at least two semiconductor controllers (6, 7, 8) which are rendered conducting or fired at particular firing instants, comprising the following method steps:

   - determining a rotor position angle ($\theta$),
   - determining the system voltage phase position in at least one of the phases (A, B, C) of the three-phase system,
   - specifying the firing instants on the basis of the position angle ($\theta$) and the system voltage phase position such that a positive torque is produced,
   wherein
   - a pair of two of the semiconductor controllers (6, 7, 8) is specified on the basis of the position angle ($\theta$) of the rotor, **characterised in that**
   - an appropriate system voltage phase position is specified for the pair of two of the semiconductor controllers (6, 7, 8) for producing a positive torque on the basis of the position angle ($\theta$) of the rotor, wherein the specification is performed on the basis of sub-ranges (21) for the total angular range of the position angle ($\theta$), 0 to 360°, wherein at least some of the sub-ranges (21) are each assigned an appropriate system voltage phase position for the pair of two of the semiconductor controllers (6, 7, 8), and the system voltage phase position assigned to the sub-range (21) containing the position angle ($\theta$) is specified,
   - switching instants for the semiconductor controllers (6, 7, 8) of the respective pair are specified on the basis of the appropriate system voltage phase position together with the system voltage phase position.

**Revendications**

1. Dispositif pour faire fonctionner un moteur (1) synchrone comprenant

   - un commutateur (4) triphasé, qui peut être raccordé à un réseau de courant triphasé et qui comprend au moins deux commutateurs (6, 7, 8) à semi-conducteurs pour les phases (A, B, C) du réseau triphasé,
   - un indicateur de position pour la détermination de l'angle ($\theta$) de position du rotor du moteur (1) de synchrone,
   - un dispositif de détermination de la position en phase de la tension du réseau pour au moins l'une des phases (A, B, C) du réseau triphasé,
   - des moyens de fixation d'une paire de deux des commutateurs (6, 7, 8) à semi-conducteurs au moyen de l'angle ($\theta$) de position du rotor,
   - des moyens de fixation d'instants de commutation pour les commutateurs (6, 7, 8) à semi-conducteurs de la paire respective, au moyen de la position en phase de la tension du réseau, **caractérisé par**

- des moyens de fixation d'une position en phase adaptée de la tension du réseau pour la paire de deux des commutateurs (6, 7, 8) à semi-conducteurs, pour la production d'un couple de rotation positif, au moyen de l'angle ($\theta$) de position du rotor, les moyens de fixation d'une position en phase adaptée de la tension du réseau pour la paire de deux des commutateurs (6, 7, 8) à semi-conducteurs étant tels que la fixation s'effectue au moyen de sous-plages (21) de la plage angulaire totale de l'angle ($\theta$) de position, 0 à 360°, respectivement une position en phase adaptée de la tension du réseau pour la paire de deux commutateurs (6, 7, 8) à semi-conducteurs étant associée à au moins une partie des sous-plages (21) et les moyens de fixation d'une position en phase adaptée de la tension du réseau fixant la position en phase de la tension du réseau qui est associée à la sous-plage (21) dans laquelle se trouve l'angle ($\theta$) de position.

2. Dispositif suivant la revendication 1, qui comprend une table mémorisée, dans laquelle les sous-plages (21) et les positions en phase adaptées de la tension du réseau sont mémorisées.

3. Dispositif suivant la revendication 1 ou 2, dans lequel les moyens de fixation de la paire de deux des commutateurs (6, 7, 8) à semi-conducteurs sont tels que la fixation s'effectue au moyen de sous-plages (21) pour toute la plage angulaire de l'angle ($\theta$) de position, 0 à 360°, respectivement une paire de deux des commutateurs (6, 7, 8) à semi-conducteurs étant associée à une partie des sous-plages (21) et les moyens de fixation d'une paire fixant la paire qui est associée à la sous-plage (21) dans laquelle se trouve l'angle ($\theta$) de position.

4. Dispositif suivant la revendication 3, qui comprend une table mémorisée, dans laquelle les sous-plages (21) et les paires associées sont mémorisées.

5. Dispositif suivant l'une des revendications précédentes, qui est tel que six sous-plages (21) sont utilisées.

6. Dispositif suivant l'une des revendications précédentes, qui est tel que chaque sous-plage (21) comprend une plage angulaire de l'angle électrique de position de 60°.

7. Dispositif suivant l'une des revendications précédentes, dans lequel les moyens de fixation d'instants de commutation sont tels qu'ils provoquent une commutation pour les commutateurs (6, 7, 8) à semi-conducteurs de la paire fixée, si les positions en phase de la tension du réseau pour deux phases (A, B, C) des commutateurs (6, 7, 8) à semi-conducteurs de la paire fixée correspondent à la position en phase adaptée et fixée de la tension du réseau.

8. Dispositif suivant l'une des revendications précédentes, comprenant des moyens de détermination d'un passage par zéro, pour au moins l'une des phases (A, B, C) et des moyens de fixation d'un angle de commutation pour fixer les instants de commutation, de manière retardée par rapport au passage par zéro de la tension.

9. Dispositif suivant l'une des revendications précédentes, comprenant trois commutateurs (6, 7, 8) à semi-conducteurs, composés respectivement de deux thyristors (A1, A2, B1, B2, C1, C2) montés tête-bêche.

10. Procédé pour faire fonctionner un moteur (1) synchrone, comprenant un commutateur (4) triphasé qui est raccordé à un réseau triphasé qui a au moins deux commutateurs (6, 7, 8) à semi-conducteurs, qui deviennent conducteurs ou qui sont amorcés à des instants d'amorçage déterminés, comprenant les stades de procédé suivants :

    - détermination d'un angle ($\theta$) de position du rotor,
    - détermination de la position en phase de la tension du réseau dans au moins l'une des phases (A, B, C) du réseau triphasé,
    - fixation des instants d'amorçage au moyen de l'angle ($\theta$) de position et de la position en phase de la tension du réseau, de manière à produire un couple de rotation positif, en
    - fixant une paire de deux des commutateurs (6, 7, 8) à semi-conducteurs, au moyen de l'angle ($\theta$) de position du rotor, **caractérisé en ce que**
    - on fixe une position en phase adaptée de la tension du réseau pour la paire de deux commutateurs (6, 7, 8) à semi-conducteurs pour la production d'un couple de rotation positif, au moyen de l'angle ($\theta$) de position du rotor, la fixation étant effectuée au moyen de sous-plages (21) pour toute la plage angulaire de l'angle ($\theta$) de position, 0 à 360°, une position en phase adaptée de la tension du réseau pour la paire de deux des commutateurs (6, 7, 8) à semi-conducteurs étant associée à au moins une partie des sous-plages (21) et on fixe la position en phase de la tension du réseau qui est associée à la sous-plage (21) dans laquelle se trouve l'angle ($\theta$) de position,

- on fixe, ensemble avec la position en phase de la tension du réseau, des instants de commutation pour les commutateurs (6, 7, 8) à semi-conducteurs de la paire respective, au moyen de la position en phase adaptée de la tension du réseau, ensemble avec la position en phase de la tension du réseau.

FIG 1

FIG 2

$-\sin(\theta)$

$\cos(\theta)$

AB

$-\sin(\theta)-\cos(\theta)\cdot 3^{-1/2}$

A1 B2

A2 B1

AC

$-\sin(\theta)+\cos(\theta)\cdot 3^{-1/2}$

A1 C2

A2 C1

BC

$2\cdot\cos(\theta)\cdot 3^{-1/2}$

B1 C2

B2 C1

B2 C1

B1 C2

$\theta/\pi$

2l

2l

2l

C1
A2

C1
B2

A1
B2

A1
C2

B1
B2

B1
A2

C1
A2

C1
B2

EP 2 539 998 B1

**IN DER BESCHREIBUNG AUFGEFÜHRTE DOKUMENTE**

**In der Beschreibung aufgeführte Patentdokumente**

- JP 55111688 A
- US 4125796 A
- EP 1987847 A2